# EUROPEAN PATENT APPLICATION

(11) **EP 3 862 113 A1**
(43) Date of publication of application: **11.08.2021**
(21) Application number: 21155867.1
(22) Date of filing: 08.02.2021
(51) Int. Cl.: B22F 7/08, B22F 10/25, B33Y 10/00, B33Y 80/00, B22F 10/00, B22F 12/00, B23K 26/342, A62C 13/78

(54) **ADDITIVE MANUFACTURED BOTTLE MOUNTINGS**

(30) Priority: 10.02.2020 IN 202041005733
(71) Applicant: Kidde Technologies, Inc., Wilson, NC 27896 (US)
(72) Inventor: JACOB, Robin, 560066 Karnataka (IN); KUPPUSAMY, Balasundar, 560066 Karnataka (IN)
(74) Representative: Dehns

(57) **Abstract**

A method of making a mountable bottle includes mounting a container in a fixture, and loading the container and the fixture into an additive manufacturing machine. A mounting bracket is additively manufactured directly onto the container.

## Description

### BACKGROUND

The present disclosure relates to metal containers, and in particular, to metal containers comprising mounting brackets.

Containers often hold materials in the form of solid, liquid, or gas. One example of a container is a fire extinguisher. When fire extinguishers are utilized aboard an aircraft, it is common for the fire extinguisher to be mounted to a frame within the aircraft. A single aircraft may require multiple fire extinguishers, either of the same size or a different size, mounted throughout the aircraft. Mounting brackets used to mount the fire extinguishers must be durable enough to hold the fire extinguishers in a single position during all maneuvers of the aircraft. Traditional manufacturing techniques for forming the brackets for the fire extinguisher involve cutting out the brackets from sheet metal, bending the brackets, and welding or fastening the brackets to the fire extinguisher containers. Forming a strong weld between the brackets and the fire extinguisher containers can be difficult due to the curvature of the fire extinguisher containers. The curvature of the fire extinguisher results in uneven welds, and porosity in the welded joint. Additionally, the heat-affected zone associated with welding two pieces of metal together diminishes the integrity of both the fire extinguisher container and the mounting brackets. As a result, improvements are needed in the weld between the mounting brackets and the fire extinguisher containers.

### SUMMARY

In one embodiment, a method of making a mountable bottle includes mounting a container in a fixture, and loading the container and the fixture into an additive manufacturing machine. A mount is additively manufactured directly onto the container.

In another embodiment, a method of making an assembly includes mounting a fire extinguisher container into a fixture, and loading the fire extinguisher container and the fixture into a laser metal deposition additive manufacturing machine. A mounting bracket is formed on the fire extinguisher container, the mounting bracket being deposited layer by layer. Manufacturing debris and rough edges are cleaned off of the assembly.

In another embodiment, a method of making an assembly includes mounting a fire extinguisher container in a fixture, and loading the fire extinguisher container and the fixture into a laser metal deposition additive manufacturing machine. A deposition base is created on the fire extinguisher container, and a mounting bracket is formed on the deposition base, the mounting bracket being deposited layer by layer. Holes are drilled into the mounting bracket, and manufacturing debris and rough edges are cleaned off of the assembly.

### BRIEF DESCRIPTION OF THE DRAWINGS

FIG. 1 is a perspective view of a fire extinguisher system.
FIG. 2A is a zoomed-in perspective view of a fire extinguishing system showing a mounting bracket.
FIG. 2B is another zoomed-in perspective view of the fire extinguishing system and the mounting bracket from FIG. 2A.
FIG. 3 is a schematic diagram of a laser metal deposition additive manufacturing machine.
FIG. 4A is a perspective view of a deposition base on a fire extinguisher container.
FIG. 4B is a perspective view of a deposition base and a support structure on a fire extinguisher container.
FIG. 4C is a perspective view of a deposition base, a support structure, and part of the body of a mount on a fire extinguisher container.
FIG. 4D is a perspective view of a deposition base, a support structure, and the body of a mount on a fire extinguisher container.
FIG. 4E is a perspective view of a deposition base, a support structure, and the body of the mount with holes on a fire extinguisher container.
FIG. 5A is a perspective view of multiple mounts on a fire extinguisher container.
FIG. 5B is a perspective view of a partially built mount on a fire extinguisher container.
FIG. 5C is a perspective view of a mount on a fire extinguisher container.
FIG. 5D is a perspective view of a mount with a hole on a fire extinguisher container.
FIG. 6 is a flowchart of a process to additively manufacture a mount on to a fire extinguisher container.

### DETAILED DESCRIPTION

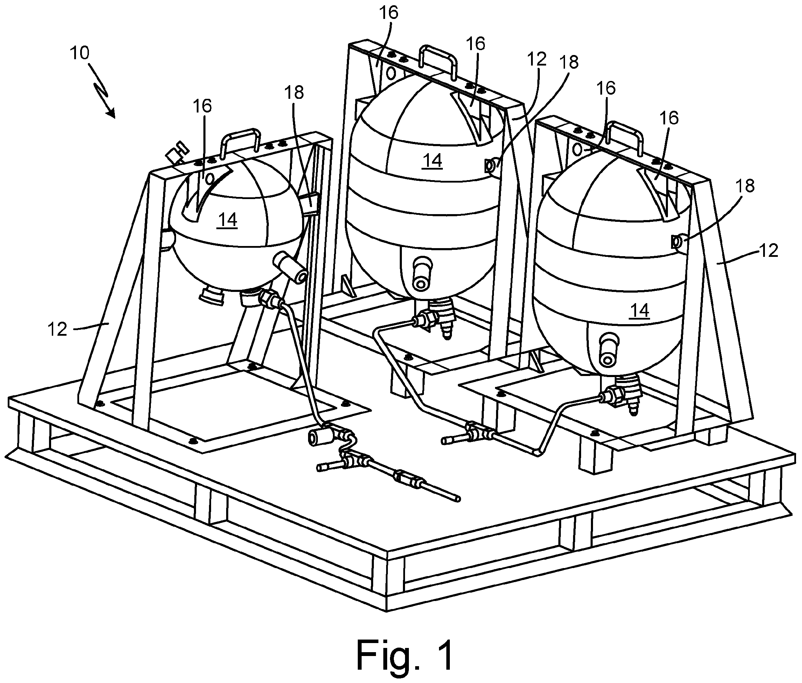

The disclosure relates to a fire extinguisher container or bottle with mounting brackets that are additively manufactured directly onto the surface of the fire extinguisher container using direct laser metal deposition (LDM) additive manufacturing techniques. Additively manufacturing the mounting brackets onto the surface of the fire extinguisher container provides a joint between the fire extinguisher container and the mounting brackets that is strong enough to withstand vibrations, shocks, turbulence, and any other environmental aspects of an aircraft in flight. The fire extinguisher container with mounting brackets that are additively manufactured directly on the surface of the fire extinguisher container using direct laser metal deposition additive manufacturing techniques will be described below with reference to FIGS. 1-6.

FIG. 1 is a perspective view of several fire extinguisher systems 10. In the embodiment of FIG. 1, each fire extinguisher system 10 includes frame 12, fire extinguisher container 14, mounting bracket 16, and mounting bracket 18. Frame 12 holds and protects fire extinguisher container 14 within an aircraft (not shown). Fire extinguisher container 14 is connected to frame 12 by mounting bracket 16 and/or mounting bracket 18. Mounting bracket 16 and mounting bracket 18 are configured to withstand various stress and strain loads. The various stress and strain loads that mounting bracket 16 and mounting bracket 18 must withstand are generated by vibrations and gravitational effects of the airplane while maneuvering.

Each fire extinguisher container 14 can be a bottle made of aluminum alloys, copper alloys, nickel alloys, steel alloys, titanium alloys and/or any other suitable material. Fire extinguisher container 14 can be a one-piece metal pressure container, a two-piece metal pressure container, or any other suitable construction of metal pressure containers. Mounting bracket 16 and mounting bracket 18 can be made of aluminum alloys, copper alloys, nickel alloys, steel alloys, titanium alloys and/or any other suitable material. Mounting bracket 16 and mounting bracket 18 can be formed from the same material as fire extinguisher container 14. In other embodiments, mounting bracket 16 and mounting bracket 18 can be formed from a different material than fire extinguisher container 14.

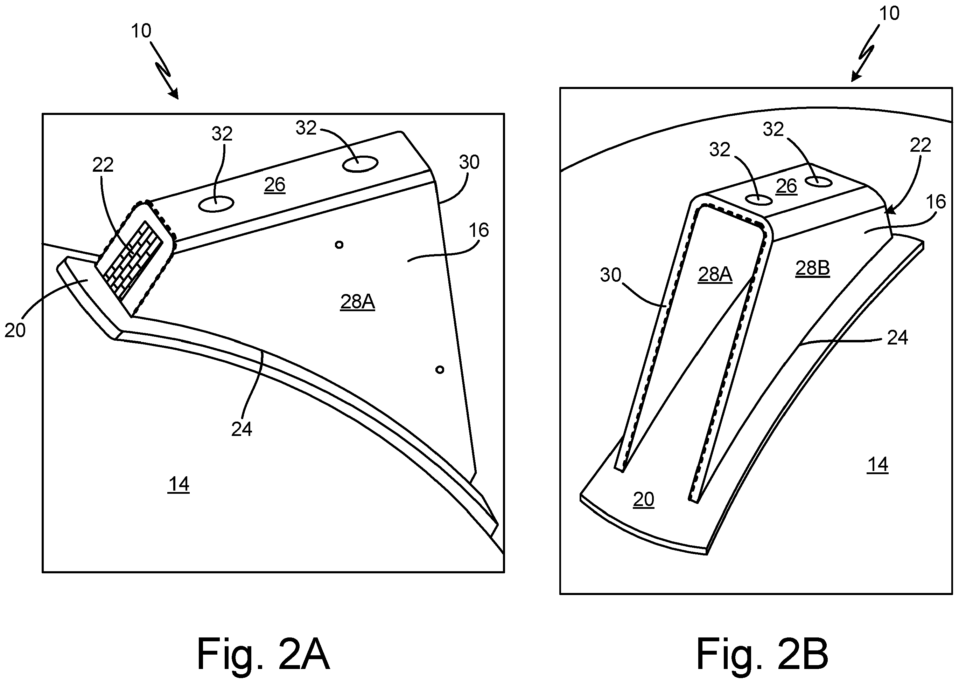

FIGS 2A and 2B will be discussed concurrently. FIG. 2A is a zoomed-in perspective view of fire extinguishing system 10 showing mounting bracket 16. FIG. 2B is another zoomed-in perspective view of fire extinguishing system 10 showing mounting bracket 16. Mounting bracket 16 includes deposition base 20, supporting structure 22, first end 24, connecting plate 26, side plates 28 (28_{A} and 28_{B}), second end 30, and holes 32. Deposition base 20 is contiguous to fire extinguisher container 14. Base layer 20 conforms to the contour of fire extinguisher container 14. Support structure 22 extends outward from base layer 20. Support structure 22 is necessary to structurally support connecting plate 26 and side plates 28 throughout the manufacturing process of mounting bracket 16. First end 24 of side plates 28 is contiguous to deposition base 20. First end 24 extends from structural support 22 to second end 30, conforming to the contour of base 20. Connecting plate 26 extends from support structure 22 in a planar direction. In contrast to first end 24, connecting plate 26 does not conform to the contour of base 20. Side plates 28 extend outward from first end 24 to connecting plate 26 and extend from support structure 22 to second end 30. Holes 32 are manufactured into connecting plate 26. Holes 32 are configured to receive fasteners (not shown) and attach mounting bracket 16 to frame 12 (shown in FIG. 1). Mounting bracket 16 is manufactured using additive manufacturing.

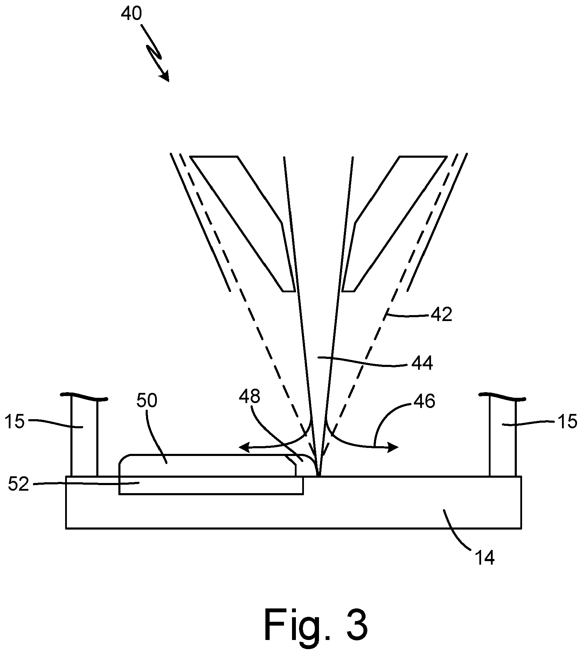

FIG. 3 is a schematic diagram of direct LMD additive manufacturing. LMD 40 includes powder stream 42, laser beam 44, shield gas 46, melt pool 48, deposited zone 50, and fusion zone 52. LMD 40 additively manufactures components on the surface of another piece. In the present embodiment, LMD 40 additively manufactures mounting bracket 16 or mounting bracket 18 on the surface of fire extinguisher container 14.

In the operation of LMD 40, fire extinguisher container 14 is loaded into fixture 15 and fixture 15 and fire extinguisher container 14 are loaded into LMD 40. Laser beam 44 heats a surface of fire extinguisher container 14 and creates melt pool 48. Powder stream 42 is directed, with the help of shield gas 46, into melt pool 48. When powder from powder stream 42 comes into contact with melt pool 48, the powder from powder stream 42 melts. Melt pool 48 and the melted powder from powder stream 42 constitute deposited zone 50 and fusion zone 52. Deposited zone 50 is a new layer of material added above the surface of fire extinguisher container 14. Fusion zone 52 contains materials from original fire extinguisher container 14, melt pool 48, and powder stream 42. Fusion zone 52 forms a strong bond between fire extinguisher container 14 and mounting bracket 16 or mounting bracket 18.

In the present embodiment, LMD 40 utilizes powder stream 42 to introduce an additive material. In other embodiments, LMD 40 can introduce additive materials with wire, sheet, or any other suitable material form. In addition to guiding powder 42 to melt pool 48, shield gas 46 also prevents melt pool 48 from being exposed to oxygen, nitrogen, and hydrogen. Oxygen, nitrogen, hydrogen are known to cause porosity and other issues when these elements interact with melt pool 48. Powder stream 42 can be made from a spectrum of powders, including nickel, copper, cobalt, aluminum, titanium, and/or any combination thereof.

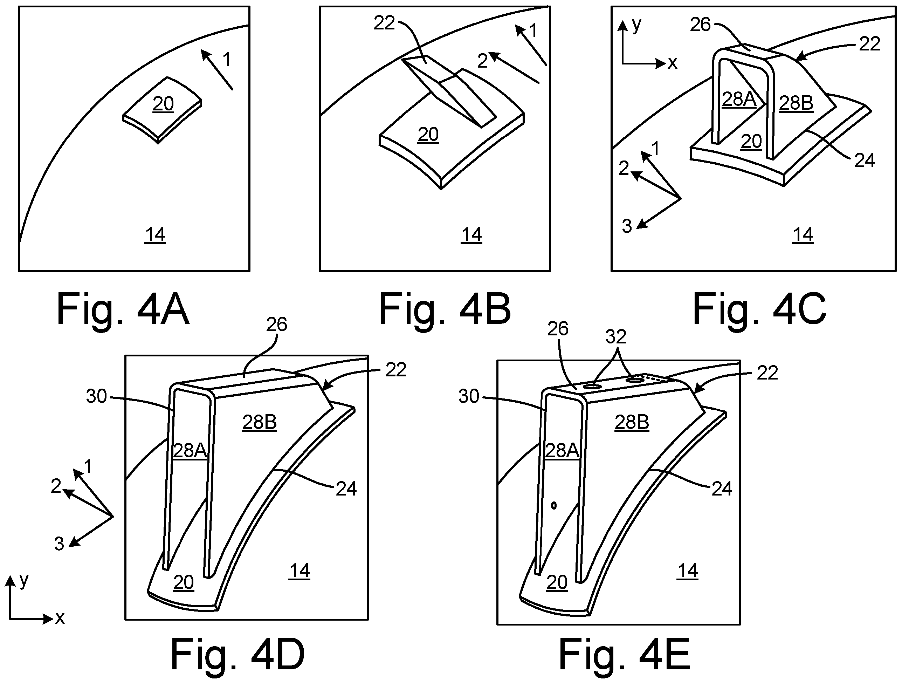

FIGS. 4A-4E are sequential perspective views of the additive formation of mounting bracket 16 onto the surface of fire extinguisher container 14. As shown in FIG. 4A, LMD 40 (shown in FIG. 3) additively manufactures a portion of deposition base 20 onto the surface of fire extinguisher container 14. As discussed above, deposition base 20 is contiguous to and conforms to the contour of fire extinguisher container 14. During processing, fusion zone 52 (shown in FIG. 3) is formed between deposition base 20 and fire extinguisher container 14. The large area of fusion zone 52 between deposition base 20 and fire extinguisher container 14 increases the strength and stability of mounting bracket 16. Deposition base 20 is additively manufactured in build direction 1.

FIG. 4B is a perspective view of deposition base 20 and support structure 22 being additively manufactured onto the surface of fire extinguisher container 14. LMD 40 builds support structure 22 directly on the surface of deposition base 20 in build direction 2. Support structure 22 supports the balance of mounting bracket 16 throughout the manufacturing process. After manufacturing, support structure 22 improves the overall strength and rigidity of mounting bracket 16.

FIG. 4C is a perspective view of a portion of deposition base 20, support structure 22, a portion of first end 24, a portion of connecting plate 26, and a portion of side plates 28 being additively manufactured on to the surface of fire extinguisher container 14. After support bracket 22 is built on deposition base 20 in the direction of build plane 2, LMD 40 can build more of deposition base 20, first end 24, connecting plate 26, and side plates 28 on build plane 3. While building deposition base 20, first end 24, connecting plate 26, and side plates 28, deposition base 20 and first end 24 curve to conform to the surface of fire extinguisher container 14, and connecting plate 26 is planar. Because deposition base 20 and first end 24 conform to fire extinguisher container 14 and connecting plate 26 is planar, side plates 28 extend further in the Y direction as the construction of mounting bracket 16 continues.

FIG. 4D shows a progression in the additive manufacturing of mounting bracket 16 from FIG. 4C. The additive construction of deposition base 20, first end 24, connecting plate 26, and side plates 28 is continued to second end 30. While building deposition base 20, first end 24, connecting plate 26, and side plates 28, deposition base 20 and first end 24 continue to conform to the surface of fire extinguisher container 14, and connecting plate 26 continues to be planar. Because deposition base 20 and first end 24 conform to fire extinguisher container 14, and connecting plate 26 is planar, side plates 28 extend further in the Y direction as mounting bracket 16 is additively manufactured toward second end 30. Second end 30 is open with side plates 28 spaced apart from each other, resulting in mounting bracket 16 being hollow and configured to allow access to fasteners as needed while attaching mounting bracket 16 to frame 12.

FIG. 4E is a perspective view of completed mounting bracket 16 additively manufactured onto fire extinguisher container 14. Mounting bracket 16 includes holes 32. Holes 32 are used to attach mounting bracket 16 to frame 12. In one embodiment, holes 32 are drilled into mounting bracket 16 after mounting bracket 16 is removed from LMD 40. In other embodiments, LMD 40 can be a hybrid LMD additive manufacturing machine. Hybrid LMD machines are configured to change tools, and therefore, can do multiple different processes, such as milling, drilling, additive manufacturing, planing, and/or any other suitable machining operation without removing the component or changing machines. Hybrid LMD machines save time and eliminate failure modes as hybrid LMD machines can utilize fixture 15 for both the additive manufacturing of mounting bracket 16 and for the drilling of holes 32 into mounting bracket 16.

In one embodiment, LMD 40 creates a single mounting bracket 16 on the surface of fire extinguisher container 14. In other embodiments, LMD 40 can create a plurality of mounting brackets 16 on the surface of fire extinguisher container 14 in a single operation. After LMD 40 creates mounting bracket 16, LMD 40 can be configured to clean manufacturing debris and burs from mounting bracket 16. In another embodiment, the cleaning of the mounting bracket 16 may be completed after fire extinguisher container 14 and mounting bracket 16 are removed from LMD 40 and fixture 15.

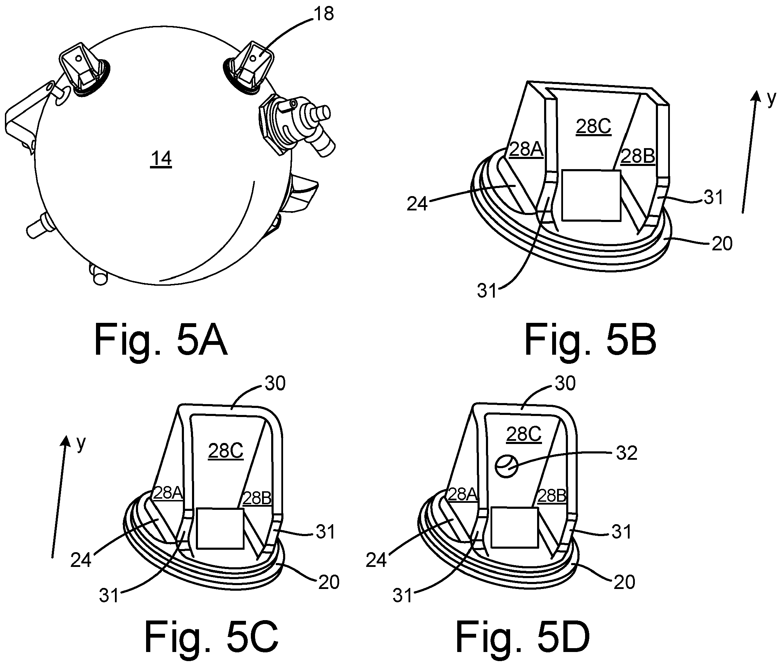

FIGS. 5A-5D are sequential perspective views of mounting bracket 18 being additively manufactured onto fire extinguisher container 14. FIG. 5A is a perspective view of fire extinguisher container 14. Fire extinguisher container 14 includes mounting bracket 18. Mounting bracket 18 attaches fire extinguisher container 14 to frame 12 (shown in FIG. 1). Similar to mounting bracket 16, mounting bracket 18 is additively manufactured directly on to the surface of fire extinguisher container 14.

FIG. 5B is a perspective view of a partially built mounting bracket 18 on the surface of fire extinguisher container 14. First, fire extinguisher container 14 is mounted into fixture 15 (as shown in Fig. 3), and fixture 15 is loaded into LMD 40 (shown in FIG. 3). Then, LMD 40 builds deposition layer 20, in build direction 4, on the surface of fire extinguisher container 14. Deposition layer 20 forms a base for mounting bracket 18. Next, LMD 40 builds side plates 28 (28_{A}, 28_{B}, and 28_{C}) starting at first end 24 and extending in build direction 4 toward second end 30. While creating sides 28, LMC 40 also creates edges 31 of side plates 28. LMD 40 continues to build in build direction 4 until LMD 40 completes mounting bracket 16.

FIG. 5C is a perspective view of mounting bracket 18 on fire extinguisher container 14. In contrast to mounting bracket 16 (which uses build direction 1, build direction 2, and build direction 3), mounting bracket 18 is additively manufactured utilizing only build direction 4.

FIG. 5D is a perspective view of mounting bracket 18 with hole 32 on the surface of fire extinguisher container 12. Mounting bracket 18 includes holes 32 formed in side plate 28c. Holes 32 are used to attach mounting bracket 18 to frame 12. In one embodiment, holes 32 are drilled into mounting bracket 18 after mounting bracket 18 is removed from LMD 40 and fixture 15. In another embodiment, LMD 40 is a hybrid LMD additive manufacturing machine. Hybrid LMD machines are configured to change tools, and therefore, can do multiple different processes such as milling, drilling, additive manufacturing, planing, or any other suitable machining operation, without removing the component or changing machines. Hybrid LMD machines save time and eliminate failure modes as hybrid LMD machines can utilize fixture 15 for both the additive manufacturing of mounting bracket 16 and for the drilling of holes 32 in mounting bracket 18.

In one embodiment, LMD 40 creates a single mounting bracket 18 on the surface of fire extinguisher container 14. In another embodiment, LMD 40 can create a plurality of mounting brackets 18 on the surface of fire extinguisher container 14 in a single operation. After LMD 40 creates mounting bracket 18, LMD 40 can be configured to clean manufacturing debris and burs from mounting bracket 18. In another embodiment, the cleaning mounting bracket 18 may be completed after fire extinguisher container 14 and mounting bracket 18 are removed from LMD 40 and fixture 15.

In the above embodiments, LMD 40 creates either mounting bracket 16 or mounting bracket 18 on the surface of fire extinguisher container 14. In other embodiments, LMD 40 can make both mounting bracket 16 and mounting bracket 18 on the surface of fire extinguisher container 14.

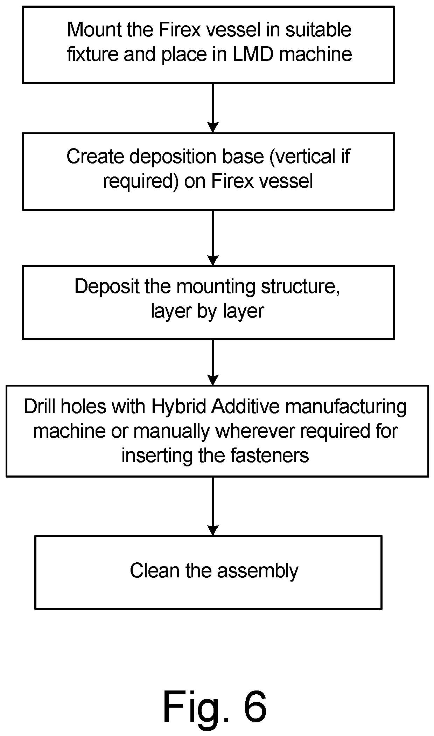

FIG. 6 is a flowchart of a process to additively manufacturing mounting bracket 16 or mounting bracket 18 onto the surface of fire extinguisher container 14. First, mount fire extinguisher container 14 in a suitable fixture, like fixture 15 (shown in FIG. 3), and place fire extinguisher container 14 into LMD 40. Then, LMD 40 creates deposition base 20 on to the surface of fire extinguisher container 14. Next, LMD 40 deposits either mounting bracket 16 or mounting bracket 18 in a layer by layer process. Next, if LMD 40 is a hybrid LMD machine, LMD 40 will change tools and drill holes into mounting bracket 16 or mounting bracket 18 as required for inserting fasteners. If LMD 40 is not a hybrid LMD machine, fire extinguisher container 14 and fixture 15 are removed from LMD 40 and the holes are drilled into mounting bracket 16 or mounting bracket 18 using a mill, drill press, hand drill, or any other suitable tool. Lastly, all manufacturing debris and burs are cleaned from fire extinguisher container 14, mounting bracket 16, and/or mounting bracket 18.

### Discussion of Possible Embodiments

The following are non-exclusive descriptions of possible embodiments of the present invention.

In one embodiment, a method of making a mountable bottle includes mounting a container in a fixture, and loading the container and the fixture into an additive manufacturing machine. A mounting bracket is additively manufactured directly onto the container.

The method of making of the preceding paragraph can optionally include, additionally and/or alternatively, any one or more of the following features, configurations and/or additional components:
drilling at least one hole in the mounting bracket; and cleaning manufacturing debris and rough edges;
wherein the container is a metal container for a fire extinguisher;
wherein the metal container is a one-piece metal container;
wherein the metal container is a two-piece metal container;
wherein the additive manufacturing machine is a laser metal deposition machine;
wherein the laser deposition machine is a hybrid laser metal deposition machine configured to additively manufacture the mounting bracket and drill holes in the mounting bracket within the hybrid metal deposition machine;
wherein a plurality of mounting brackets are additively manufactured onto an exterior surface of the container; and/or
wherein the plurality of mounting brackets is configured to mount the container to an aircraft structure.

In another embodiment, a method of making an assembly includes mounting a fire extinguisher container into a fixture, and loading the fire extinguisher container and the fixture into a laser metal deposition additive manufacturing machine. A mounting bracket is formed on the fire extinguisher container, the mounting bracket being deposited layer by layer. Manufacturing debris and rough edges are cleaned off of the assembly.

The method of making of the preceding paragraph can optionally include, additionally and/or alternatively, any one or more of the following features, configurations and/or additional components:
forming at least one hole in the mounting bracket;
wherein forming the mounting bracket of the fire extinguisher container further comprises: creating a deposition base on the fire extinguisher container; depositing the mounting bracket on the deposition base, wherein the mounting bracket is deposited layer by layer;
wherein the container for a fire extinguisher is a one-piece metal container;
wherein the container for a fire extinguisher is a two-piece metal container;
wherein the laser metal deposition machine is a hybrid laser metal deposition machine; and/or
wherein the hybrid laser metal deposition machine is configured to additively manufacture the mounting bracket and drill holes in the mounting bracket.

In another embodiment, a method of making an assembly includes mounting a fire extinguisher container in a fixture, and loading the fire extinguisher container and the fixture into a laser metal deposition additive manufacturing machine. A deposition base is created on the fire extinguisher container, and a mounting bracket is formed on the deposition base, the mounting bracket being deposited layer by layer. Holes are drilled into the mounting bracket, and manufacturing debris and rough edges are cleaned off of the assembly.

The method of making of the preceding paragraph can optionally include, additionally and/or alternatively, any one or more of the following features, configurations and/or additional components:
creating the deposition base on a first build plane; and forming the mounting bracket on a second build plane;
wherein the container for a fire extinguisher is a one-piece metal container; and/or
wherein the container for a fire extinguisher is a two-piece metal container.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of making a mountable bottle, the method comprising:
mounting a container in a fixture;
loading the container and the fixture into an additive manufacturing machine; and
additively manufacturing a mounting bracket directly onto the container.

2. The method of claim 1, further comprising:
drilling at least one hole in the mounting bracket; and
cleaning manufacturing debris and rough edges.

3. The method of claim 1 or 2, wherein the container is a metal container for a fire extinguisher;

4. The method of any preceding claim, wherein the additive manufacturing machine is a laser metal deposition machine.

5. The method of claim 4, wherein the laser deposition machine is a hybrid laser metal deposition machine configured to additively manufacture the mounting bracket and drill holes in the mounting bracket within the hybrid metal deposition machine.

6. The method of any preceding claim, wherein a plurality of mounting brackets are additively manufactured onto an exterior surface of the container; optionally wherein the plurality of mounting brackets is configured to mount the container to an aircraft structure.

7. A method of making an assembly comprising:
mounting a fire extinguisher container in a fixture;
loading the fire extinguisher container and the fixture into a laser metal deposition additive manufacturing machine;
forming a mounting bracket on the fire extinguisher container, wherein the mounting bracket is deposited layer by layer; and
cleaning manufacturing debris and rough edges off of the assembly.

8. The method of claim 7 further comprising:
forming at least one hole in the mounting bracket.

9. The method of claim 7 or 8, wherein forming the mounting bracket of the fire extinguisher container further comprises:
creating a deposition base on the fire extinguisher container;
depositing the mounting bracket on the deposition base, wherein the mounting bracket is deposited layer by layer.

10. The method of claim 7, 8 or 9, wherein the laser metal deposition machine is a hybrid laser metal deposition machine.

11. The method of claim 10, wherein the hybrid laser metal deposition machine is configured to additively manufacture the mounting bracket and drill holes in the mounting bracket.

12. The method of claim 9, wherein the method comprises:
mounting a fire extinguisher container in a fixture;
loading the fire extinguisher container and the fixture into a laser metal deposition additive manufacturing machine;
creating a deposition base on the fire extinguisher container;
forming a mounting bracket on the deposition base, wherein the mounting bracket is deposited layer by layer;
drilling holes into the mounting bracket; and
cleaning the manufacturing debris and rough edges off of the assembly.

13. The method of making an assembly of claim 12, further comprising:
creating the deposition base on a first build plane; and
forming the mounting bracket on a second build plane.

14. The method of any preceding claim, wherein the container is a one-piece metal container.

15. The method of any one of claims 1-14, wherein the container is a two-piece metal container.
